# EUROPEAN PATENT APPLICATION

(11) **EP 4 545 387 A1**
(43) Date of publication of application: **30.04.2025**
(21) Application number: 24206964.9
(22) Date of filing: 16.10.2024
(51) Int. Cl.: B62J 35/00, B60K 15/063, B60K 15/07, B62K 11/04, B62K 25/28, B62M 7/02, B62K 19/30

(54) **STRADDLE-TYPE VEHICLE**

(30) Priority: 23.10.2023 JP 2023182038
(71) Applicant: Suzuki Motor Corporation, Shizuoka 432-8611 (JP)
(72) Inventor: YAMAMOTO, Takayo, Shizuoka (JP); ODA, Tomoyuki, Shizuoka (JP)
(74) Representative: Haseltine Lake Kempner LLP

(57) **Abstract**

A straddle-type vehicle (1) travels using gas fuel. The straddle-type vehicle is provided with a vehicle body frame (10) that forms a frame of a vehicle body; a long gas tank (60) configured to store the gas fuel; and a suspension (36) configured to absorb vibration of the vehicle body. A lower portion of the vehicle body frame includes a tank bracket (71) that supports the gas tank and a suspension bracket (75) that supports the suspension. The gas tank is supported on the tank bracket such that a longitudinal direction of the gas tank is oriented in a front-rear direction, and the suspension is supported on the suspension bracket below the gas tank such that a longitudinal direction of the suspension is oriented in the front-rear direction.

## Description

### TECHNICAL FIELD

The present invention relates to a straddle-type vehicle.

### BACKGROUND ART

In recent years, a fuel cell vehicle that travels using electric power generated by a fuel cell has been developed. In a fuel cell vehicle, a hydrogen gas in a hydrogen tank and oxygen in air are chemically reacted in a fuel cell to generate electric power, and the generated electric power is supplied to a motor to drive wheels. In addition to a fuel cell vehicle, a straddle-type vehicle provided with a gas fuel engine is developed, in which a hydrogen gas is used as gas fuel and combusted and the vehicle travels using combustion energy (for example, see Patent Literature 1). In the straddle-type vehicle disclosed in Patent Literature 1, a gas tank is provided below the floor board in front of the engine.

### CITATION LIST

### PATENT LITERATURE

Patent Literature 1: JPH04-283128A

### SUMMARY OF INVENTION

### TECHNICAL PROBLEM

A configuration is considered in which a suspension is horizontally provided in the straddle-type vehicle. However, when a large gas tank is provided in front of the suspension, the vehicle becomes larger, which may lead to poor handling, increased vehicle weight, and poor turning performance.

The present invention has been made in view of the above, and an object of the present invention is to provide a straddle-type vehicle in which a gas tank and a suspension can be compactly provided to achieve a reduction in size.

### SOLUTION TO PROBLEM

In order to solve the above-described problem, a straddle-type vehicle according to an aspect of the present invention provides a straddle-type vehicle for traveling using gas fuel, the straddle-type vehicle including: a vehicle body frame that forms a frame of a vehicle body; a long gas tank configured to store the gas fuel; and a suspension configured to absorb vibration of the vehicle body, in which a lower portion of the vehicle body frame includes a tank bracket that supports the gas tank and a suspension bracket that supports the suspension, and in which the gas tank is supported on the tank bracket such that a longitudinal direction of the gas tank is oriented in a front-rear direction, and the suspension is supported on the suspension bracket below the gas tank such that a longitudinal direction of the suspension is oriented in the front-rear direction.

### ADVANTAGEOUS EFFECTS OF INVENTION

According to the straddle-type vehicle in one aspect of the present invention, the suspension is positioned below the gas tank in a state in which the longitudinal direction of the gas tank and the suspension is oriented in the front-rear direction at the lower portion of the vehicle body frame. The suspension is brought close to the gas tank, and the gas tank and the suspension are compactly provided to reduce the size of the straddle-type vehicle. Accordingly, vehicle handling is improved, an increase in vehicle weight is prevented, and the turning performance of the vehicle during traveling is improved.

### BRIEF DESCRIPTION OF DRAWINGS

FIG. 1 is a left side view of a vehicle internal structure according to the present embodiment.
FIG. 2 is a right side view of the vehicle internal structure according to the present embodiment.
FIG. 3 is a left side view of a vehicle body central portion according to the present embodiment.
FIG. 4 is a top view of the vehicle body central portion according to the present embodiment.
FIG. 5 is a bottom view of the periphery of a gas tank according to the present embodiment.
FIG. 6 is a left side view of the periphery of the gas tank according to the present embodiment.

### DESCRIPTION OF EMBODIMENTS

A straddle-type vehicle according to an aspect of the present invention travels using gas fuel. The frame of a vehicle body is formed by a vehicle body frame, and a tank bracket and a suspension bracket are provided at the lower portion of the vehicle body frame. A long gas tank that stores gas fuel is supported on the tank bracket with the longitudinal direction thereof being oriented in the front-rear direction. A suspension that absorbs vibration of the vehicle body is supported on the suspension bracket below the gas tank with the longitudinal direction thereof being oriented in the front-rear direction. The suspension is positioned below the gas tank in a state in which the longitudinal direction of the gas tank and the suspension is oriented in the front-rear direction at the lower portion of the vehicle body frame. The suspension is brought close to the gas tank, and the gas tank and the suspension are compactly provided to reduce the size of the straddle-type vehicle. Accordingly, vehicle handling is improved, an increase in vehicle weight is prevented, and the turning performance of the vehicle during traveling is improved.

### Embodiment

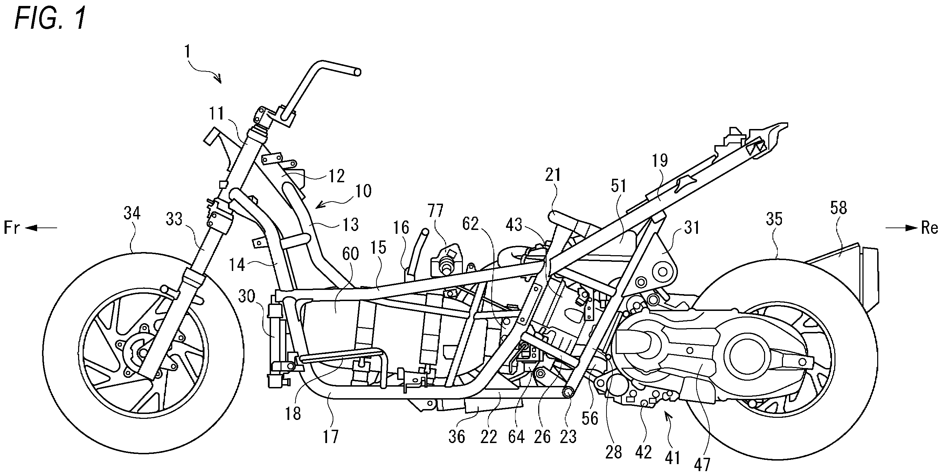

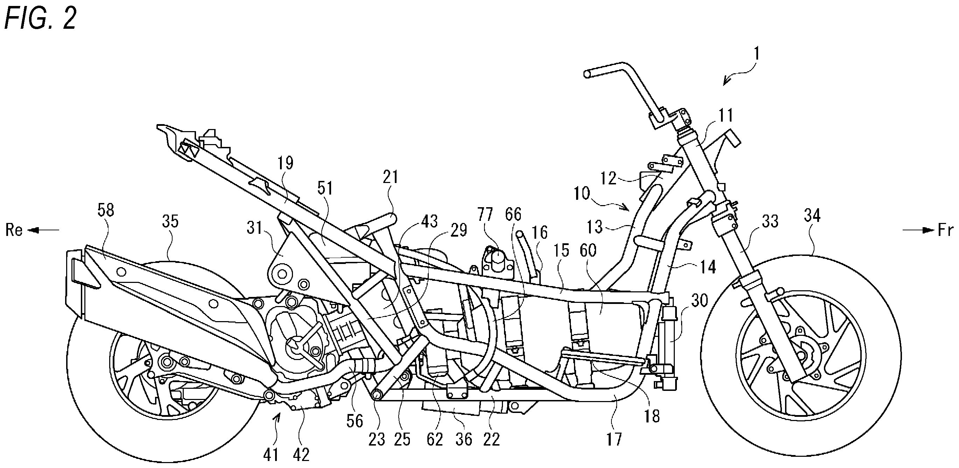

Hereinafter, a straddle-type vehicle according to the present embodiment will be described with reference to the accompanying drawings. FIG. 1 is a left side view of a vehicle internal structure according to the present embodiment. FIG. 2 is a right side view of the vehicle internal structure according to the present embodiment. In the following drawings, an arrow Fr indicates the vehicle front side, an arrow Re indicates the vehicle rear side, an arrow L indicates the vehicle left side, and an arrow R indicates the vehicle right side.

As shown in FIGS. 1 and 2, a straddle-type vehicle 1 is implemented by mounting various covers (not shown), as vehicle body exteriors, on a vehicle body frame 10 forming the frame of the vehicle body. A head pipe 11 is provided at the front end portion of the vehicle body frame 10, and a support frame 12 extends obliquely rearward and downward from the upper portion of the head pipe 11. A pair of first down frames 13 branch to the left and right from the lower portion of the support frame 12 and extend downward, and a pair of second down frames 14 branch to the left and right from the lower portion of the head pipe 11 and extend downward. A pair of main frames 15 are connected to the lower portions of the pair of first down frames 13 and the pair of second down frames 14.

The pair of main frames 15 extend toward the vehicle rear side, and the intermediate portions of the pair of main frames 15 are connected to each other by an upper bridge 16. A pair of left-right asymmetric side frames 17 extend downward from the front ends of the pair of main frames 15. The side frames 17 are bent rearward at the lower portion of the vehicle, and then extend obliquely rearward and upward toward the rear portions of the pair of main frames 15. The front half portion of the vehicle body frame 10 is formed in a cradle shape by the pair of main frames 15 and the pair of side frames 17. A pair of foot boards 18 are attached to the pair of side frames 17.

A pair of seat frames 19 extend rearward from the rear portions of the pair of main frames 15. The facing interval of the pair of seat frames 19 increases toward the middle of the frames, and then decreases toward the rear ends of the frames. The pair of seat frames 19 are formed in an arch shape, and the rear end portions of the pair of seat frames 19 are connected to each other. The front portions of the pair of seat frames 19 are connected to each other by an upper bridge 21. The rear portions of the pair of side frames 17 are connected to the upper bridge 21, and the upper bridge 21 is supported by the pair of side frames 17 from below.

A pair of left-right asymmetric lower frames 22 extend rearward from the lower portions of the pair of side frames 17. The rear end portions of the pair of lower frames 22 are connected to each other by a lower bridge 23. A left sub frame 28 extends obliquely rearward and upward from the left end portion of the lower bridge 23, and the seat frame 19 is supported by the left sub frame 28 from below. The right end portion of the lower bridge 23 and the intermediate portion of the right side frame 17 are connected to each other by a side bridge 25. A right sub frame 29 extends obliquely rearward and upward from the intermediate portion of the side bridge 25, and the seat frame 19 is supported by the right sub frame 29 from below.

A front fork 33 is steerably supported on the head pipe 11, and a front wheel 34 is rotatably supported on the lower portion of the front fork 33. A long gas tank 60 is provided inside the cradle portion in the front half portion of the vehicle body frame 10. Gas fuel such as hydrogen is stored in the gas tank 60, and a tank valve 62 at the rear portion of the tank controls inflow and outflow of the gas fuel. The gas fuel is supplied from the tank valve 62 toward an injector (not shown) above a unit swing engine (an engine) 41 via fuel system components such as a plurality of pipes, a regulator 64, and a fuel hose 66.

The unit swing engine 41 is swingably supported on support plates 31 of the left sub frame 28 and the right sub frame 29. The unit swing engine 41 is operated by the combustion energy of the gas fuel supplied from the gas tank 60. The cylinder axis of the unit swing engine 41 is inclined forward to be close to horizontal, and a cylinder assembly 43 extends forward of the vehicle from a crankcase 42. The cylinder assembly 43 enters between the left sub frame 28 and the right sub frame 29, and the front end of the cylinder assembly 43 is close to the tank valve 62 of the gas tank 60.

An intake system component such as an air cleaner 51 is connected to the upper portion of the cylinder assembly 43, and an exhaust system component such as an exhaust pipe 56 or a muffler 58 is connected to the lower portion of the cylinder assembly 43. A CVT cover 47 is attached to the left side of the crankcase 42. A rear wheel 35 is rotatably supported on the rear portion of the CVT cover 47. A belt-type continuously variable transmission (not shown) is accommodated inside the CVT cover 47, and the driving force of the unit swing engine 41 is transmitted to the rear wheel 35 via a belt. The unit swing engine 41 is swung together with the muffler 58, the CVT cover 47, and the rear wheel 35.

The unit swing engine 41 is coupled to the lower portion of the vehicle body frame 10 via a suspension 36. Since the suspension 36 extends in the front-rear direction, when the large gas tank 60 is provided in front of the suspension 36, the wheel base may extend in order to avoid interference between the suspension 36 and the gas tank 60, and the size of the vehicle may be increased. Therefore, in the present embodiment, the gas tank 60 and the suspension 36 are supported on the lower portion of the vehicle body frame 10 such that the rear portion of the gas tank 60 and the front portion of the suspension 36 overlap in the upper-lower direction.

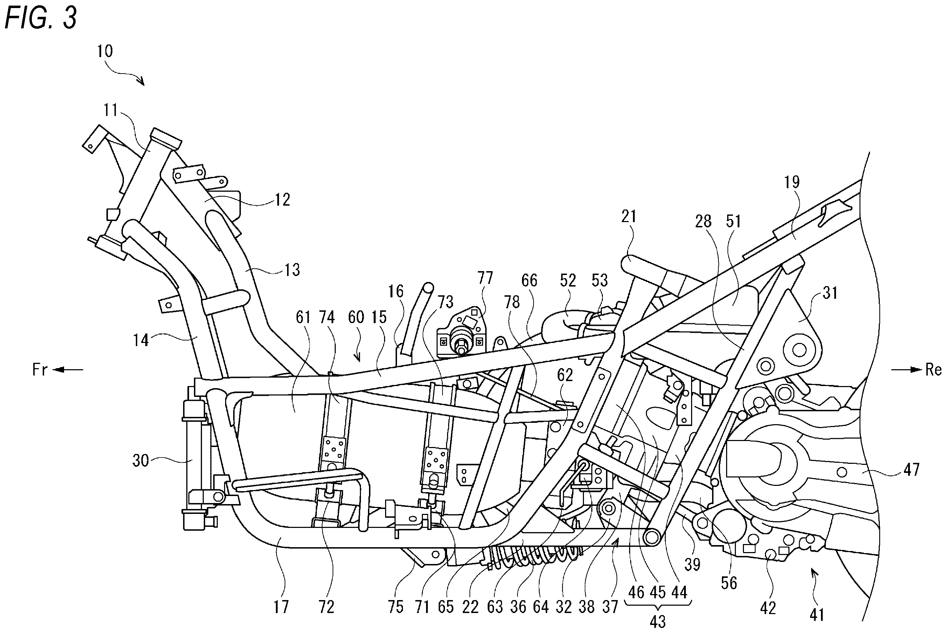

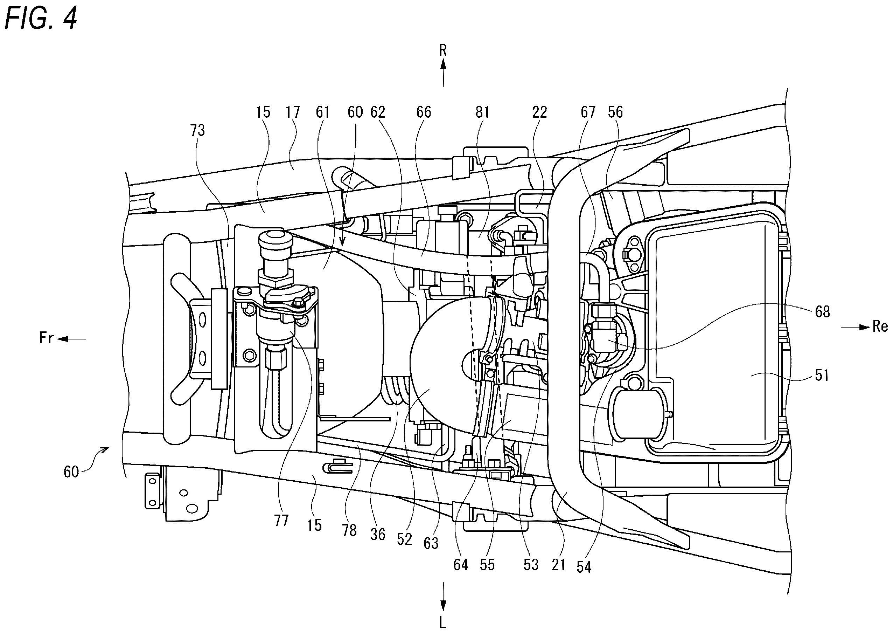

The peripheral structure of the unit swing engine will be described with reference to FIGS. 3 and 4. FIG. 3 is a left side view of a vehicle body central portion according to the present embodiment. FIG. 4 is a top view of the vehicle body central portion according to the present embodiment.

As shown in FIGS. 3 and 4, the cylinder assembly 43 of the unit swing engine 41 is formed by stacking a cylinder 44, a cylinder head 45, and a cylinder head cover 46. An intake device is provided above the cylinder head 45. The intake device includes the air cleaner 51, a U-shaped outlet tube 52, a throttle body 53, and an intake pipe 54. Air is sent from the air cleaner 51 to the throttle body 53 through the outlet tube 52, and the intake amount is adjusted by the throttle body 53, then the air is supplied to the intake port of the cylinder head 45 through the intake pipe 54.

An exhaust port is formed in the lower portion of the cylinder head 45, and the exhaust pipe 56 serving as an exhaust device is connected to the exhaust port. The exhaust pipe 56 is curved rearward from the lower surface of the cylinder head 45 and then extends to the vehicle rear side through the right side of the crankcase 42. The muffler 58 (see FIG. 2) inclined obliquely rearward and upward at the right side of the rear wheel 35 is connected to the rear end portion of the exhaust pipe 56. The exhaust gas flows into the exhaust pipe 56 from the exhaust port of the unit swing engine 41, flows rearward through the exhaust pipe 56, and then is discharged to the outside from the muffler 58.

A link mechanism 37 for the suspension 36 is provided below the cylinder head 45. The link mechanism 37 includes a link lever 38 having an arc shape in the side view, and the intermediate portion of the link lever 38 is swingably coupled to a link bracket 32 of the vehicle body frame 10. The upper end portion of the link lever 38 is swingably coupled to the lower portion of the crankcase 42 via a link arm 39, and the lower end portion of the link lever 38 is coupled to a suspension bracket 75 of the vehicle body frame 10 via the suspension 36. The suspension 36 expands and contracts as the unit swing engine 41 swings, thereby absorbing vibrations transmitted to the vehicle body.

The gas tank 60 is provided in front of the unit swing engine 41. A tank main body 61 of the gas tank 60 is formed in a cylindrical shape, and both end portions of the tank main body 61 bulge in a hemispherical shape. The longitudinal direction of the tank main body 61 is oriented in the front-rear direction, and the front end of the tank main body 61 is slightly inclined to be higher than the rear end. The gas tank 60 is supported on the lower portion of the vehicle body frame 10 via a pair of front tank bracket 71 and rear tank bracket 72. Bands 73 and 74 are attached to the pair of tank brackets 71 and 72, and the outer circumferential surface of the tank main body 61 is fastened by the bands 73 and 74.

The tank valve 62 is provided at the rear end portion of the tank main body 61, and the regulator 64 is connected to a relief valve pipe 63 extending obliquely rearward and upward from the lower portion of the tank valve 62. When the pressure of the gas fuel reaches a predetermined pressure or higher, the valve of the regulator 64 is opened to adjust the pressure of the gas fuel. A fuel filling port 77 is formed above the gas tank 60, and the upper portion of the tank valve 62 is connected to a filling pipe 78 that extends obliquely downward and rearward from the fuel filling port 77. The tank is filled with the gas fuel from the fuel filling port 77 through the tank valve 62. A radiator 30 for engine cooling is provided in front of the gas tank 60.

An injector joint 68 is connected to the regulator 64 via an upstream pipe 65, the fuel hose 66, and a downstream pipe 67. The upstream pipe 65 and the downstream pipe 67 are formed of a hard pipe material such as metal, and the fuel hose 66 is formed of a soft rubber hose. The upstream pipe 65 crosses below the tank valve 62 and extends from the regulator 64 at the vehicle body left side to the vehicle body right side. At the vehicle body right side, the lower end portion of the fuel hose 66 is connected to the upstream pipe 65, and the fuel hose 66 extends upward through the right side of the gas tank 60. The upper end portion of the fuel hose 66 is connected to the injector joint 68 above the cylinder head 45 via the downstream pipe 67.

In this way, the gas fuel is supplied from the tank valve 62 of the gas tank 60 to the unit swing engine 41 through the relief valve pipe 63, the regulator 64, the upstream pipe 65, the fuel hose 66, and the downstream pipe 67. A protection bridge 81 that connects the right lower frame 22 and the left side frame 17 is provided at the rear side of the tank valve 62. The protection bridge 81 extends obliquely so as to avoid the regulator 64 and the link mechanism 37. When the straddle-type vehicle 1 receives an impact from the rear side, the tank valve 62 is protected from the rear side component such as the link mechanism 37 by the protection bridge 81.

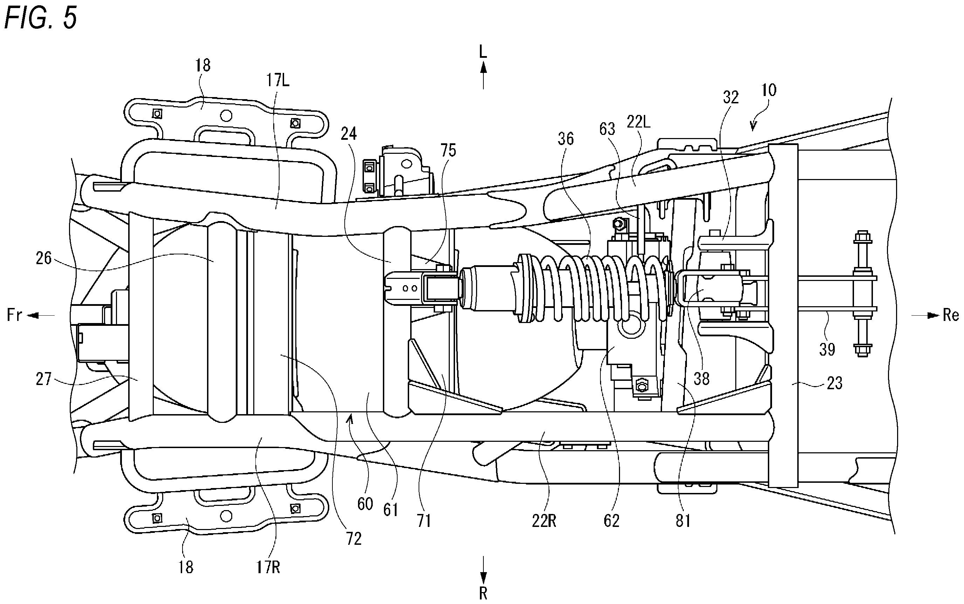

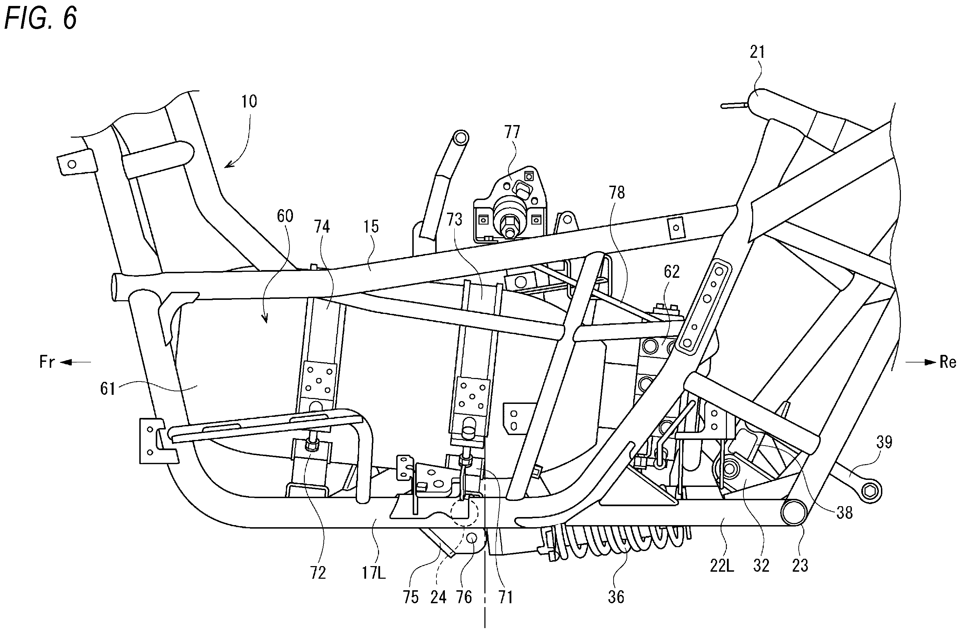

The layout of the gas tank will be described with reference to FIGS. 5 and 6. FIG. 5 is a bottom view of the periphery of the gas tank according to the present embodiment. FIG. 6 is a left side view of the periphery of the gas tank according to the present embodiment. In the following description, the side frame and the lower frame on the left side are denoted by a reference sign L, and the side frame and the lower frame on the right side are denoted by a reference sign R.

As shown in FIG. 5, a pair of frame portions of the vehicle body frame 10 are located on both sides of the gas tank 60, and the pair of frame portions are formed left-right asymmetrically by a pair of side frames 17L and 17R and a pair of lower frames 22L and 22R. At the lower portion of the left frame portion, the lower side portion of the side frame 17L is long and the lower frame 22L is short, and at the lower portion of the right frame portion, the lower side portion of the side frame 17R is short and the lower frame 22R is long. The lower side portion of the left side frame 17L is longer than the lower side portion of the right side frame 17R, and the left lower frame 22L is shorter than the right lower frame 22R.

The rear end portion of the left lower frame 22L and the rear end portion of the right lower frame 22R are connected to each other by the lower bridge 23. The lower side portion rear side of the left side frame 17L and the front side of the right lower frame 22R are connected to each other by a lower bridge (a bridge portion) 24. The lower side portion of the left side frame 17L and the lower side portion of the right side frame 17R are connected to each other by a pair of lower bridges 26 and 27. The pair of side frames 17L and 17R and the pair of lower frames 22L and 22R are connected via the plurality of lower bridges 23, 24, 26, and 27, thereby increasing the rigidity of the vehicle body frame 10.

As shown in FIGS. 5 and 6, in the vicinity of the lower bridge 24, the tank bracket 71 is provided on the upper surface of the lower side portion of the left side frame 17L and the upper surface of the right lower frame 22R. In the vicinity of the lower bridge 26, the tank bracket 72 is provided on the upper surface of the lower side portions of the pair of side frames 17L and 17R. The tank bracket 71 connects the lower side portion of the left side frame 17L to the lower frame 22R, and the tank bracket 72 connects the lower side portions of the pair of side frames 17L and 17R. The tank brackets 71 and 72 reinforce the vehicle body frame 10 to increase the rigidity.

In a state in which the longitudinal direction of the gas tank 60 is oriented in the front-rear direction, the front side of the gas tank 60 is supported on the tank bracket 72, and the rear side of the gas tank 60 is supported on the tank bracket 71. The support surfaces of the tank brackets 71 and 72 are formed in an arc shape in the front view along the outer surface of the gas tank 60. The support surface of the front tank bracket 72 is higher than the support surface of the rear tank bracket 71, and the gas tank 60 is inclined such that the rear side of the gas tank 60 is slightly lower than the front side. The bands 73 and 74 are attached to the tank brackets 71 and 72, and the gas tank 60 is held by fastening the bands 73 and 74.

The lower bridge 24 is provided with the suspension bracket 75, and the lower bridge 23 is provided with the link bracket 32. The suspension bracket 75 protrudes obliquely downward and rearward from the lower bridge 24, and the front end portion of the suspension 36 is swingably supported on the suspension bracket 75. The link bracket 32 protrudes obliquely upward and forward from the lower bridge 23, and the rear end portion of the suspension 36 is swingably supported on the link bracket 32 via the link lever 38. When viewed from below, the suspension bracket 75 and the link bracket 32 face each other in the front-rear direction.

In a state in which the longitudinal direction of the suspension 36 is oriented in the front-rear direction, the front end portion of the suspension 36 is supported on the suspension bracket 75, and the rear end portion of the suspension 36 is supported on the lower portion of the link lever 38. The support position of the suspension bracket 75 is lower than the support position of the link lever 38, and the suspension 36 is inclined such that the rear side of the suspension 36 is higher than the front side. Although the inclination of the suspension 36 is opposite to that of the gas tank 60, a sufficient gap is secured between the suspension 36 and the gas tank 60. The front-rear length of the installation space is reduced by the amount that the gas tank 60 and the suspension 36 are inclined.

The suspension bracket 75 is located below the tank bracket 71, and the front end portion of the suspension 36 is supported on the suspension bracket 75 below the gas tank 60. The gas tank 60 is supported on the upper side of the lower bridge 24 by the tank bracket 71, and the suspension 36 is supported on the lower side of the lower bridge 24 by the suspension bracket 75. The support points of the tank bracket 71 and the suspension bracket 75 are concentrated together, most of the suspension 36 is positioned below the gas tank 60, and the gas tank 60 and the suspension 36 are compactly provided on the vehicle body frame 10.

The front end portion of the suspension 36 is supported in a support hole 76 of the suspension bracket 75, and the rear end of the tank bracket 71 is located rearward of the support hole 76 of the suspension bracket 75. The rear tank bracket 71 overlaps the front end portion of the suspension 36 from above, so that the rear side of the gas tank 60 is supported by the tank bracket 71. The gap between the front tank bracket 71 and the rear tank bracket 72 is widened, and the gas tank 60 is stably held. The suspension 36 is provided using a space below the gas tank 60 to shorten the wheel base of the straddle-type vehicle 1.

As described above, according to the straddle-type vehicle 1 in the present embodiment, the suspension 36 is positioned below the gas tank 60 in a state in which the longitudinal direction of the gas tank 60 and the suspension 36 is oriented in the front-rear direction at the lower portion of the vehicle body frame 10. The suspension 36 is brought close to the gas tank 60, and the gas tank 60 and the suspension 36 are compactly provided to reduce the size of the straddle-type vehicle 1. Accordingly, vehicle handling is improved, an increase in vehicle weight is prevented, and the turning performance of the vehicle during traveling is improved.

In the present embodiment, although the gas tank and the suspension are inclined, it is sufficient that the gas tank and the suspension are supported with the longitudinal direction thereof being oriented in the front-rear direction. For example, the gas tank and the suspension may be horizontally supported.

In the present embodiment, the front tank bracket is provided on the lower side portions of the left and right side frames, and the rear tank bracket is provided on the lower side portion of the left side frame and the right lower frame. However, it is sufficient that the tank bracket is provided on the lower portion of the vehicle body frame. For example, the tank bracket may be provided on the lower bridge.

In the present embodiment, the suspension bracket is provided on the lower bridge. However, it is sufficient that the suspension bracket is provided on the lower portion of the vehicle body frame. For example, the suspension bracket may be provided on the lower side portion of the lower frame or the side frame. The suspension bracket may be provided on the tank bracket.

The unit swing engine is exemplified as an engine in the present embodiment. However, the engine is not limited to the unit swing engine as long as the engine is operated by the combustion energy of the gas fuel.

The engine is a hydrogen engine using hydrogen gas in the present embodiment. Alternatively, the engine may be other gas fuel engines using other gas fuel such as a methane gas and a propane gas.

A single gas tank is provided in the straddle-type vehicle in the present embodiment. Alternatively, a plurality of gas tanks may be provided in the straddle-type vehicle.

Both end portions of the gas tank are formed in a cylindrical shape bulging in a hemispherical shape in the present embodiment. However, the shape of the gas tank is not limited as long as the gas tank has a shape capable of storing the gas fuel.

The layout of the gas tank according to the present embodiment is not limited to the above-described straddle-type vehicle, and may be used in other types of straddle-type vehicles. The straddle-type vehicle is not limited to a general vehicle in which the driver rides on the seat in a posture of straddling the seat, and includes a scooter-type vehicle in which the driver rides on the seat without straddling the seat.

As described above, a first aspect provides a straddle-type vehicle (1) for traveling using gas fuel, the straddle-type vehicle including: a vehicle body frame (10) that forms a frame of a vehicle body; a long gas tank (60) configured to store the gas fuel; and a suspension (36) configured to absorb vibration of the vehicle body, in which a lower portion of the vehicle body frame includes a tank bracket (71) that supports the gas tank and a suspension bracket (75) that supports the suspension, and in which the gas tank is supported on the tank bracket such that a longitudinal direction of the gas tank is oriented in a front-rear direction, and the suspension is supported on the suspension bracket below the gas tank such that a longitudinal direction of the suspension is oriented in the front-rear direction. According to this configuration, the suspension is positioned below the gas tank in a state in which the longitudinal direction of the gas tank and the suspension is oriented in the front-rear direction at the lower portion of the vehicle body frame. The suspension is brought close to the gas tank, and the gas tank and the suspension are compactly provided to reduce the size of the straddle-type vehicle. Accordingly, vehicle handling is improved, an increase in vehicle weight is prevented, and the turning performance of the vehicle during traveling is improved.

A second aspect is directed to the first aspect, in which the suspension bracket is located below the tank bracket. According to this configuration, the support points of the tank bracket and the suspension bracket are concentrated together, and the gas tank and the suspension are compactly provided in the vehicle body frame.

A third aspect is directed to the first aspect or the second aspect, in which the tank bracket is a pair of tank brackets that are spaced apart from each other in the front-rear direction, in which a front end portion of the suspension is supported in a support hole of the suspension bracket, and in which a rear end of the rear tank bracket is located rearward of the support hole of the suspension bracket. According to this configuration, the rear tank bracket overlaps the front end portion of the suspension from above, so that the rear side of the gas tank is supported by the tank bracket. The gap between the front tank bracket and the rear tank bracket is widened, and the gas tank is stably held.

A fourth aspect is directed to any one of the first to third aspects, in which the vehicle body frame includes a pair of frame portions (lower side portions of side frames 17L and 17R, and lower frames 22L and 22R) that are located on both sides of the gas tank, and a bridge portion (24) that connects lower portions of the pair of frame portions, and in which the tank bracket connects the lower portions of the pair of frame portions, and the suspension bracket is provided on the bridge portion. According to this configuration, the tank brackets reinforce the vehicle body frame to increase the rigidity.

Although the present embodiment has been described, as another embodiment, the above-described embodiment and modification may be combined entirely or partially.

The technique according to the present invention is not limited to the above-described embodiment, and may be variously changed, replaced, or modified without departing from the gist of the technical concept. Further, the present invention may be implemented by other methods as long as the technical concept can be implemented by the methods through advance of the technique or other derivative techniques. Therefore, the claims cover all embodiments that may fall within the scope of the technical concept.

### REFERENCE SIGNS LIST

1: straddle-type vehicle
10: vehicle body frame
17: side frame (frame portion)
22: lower frame (frame portion)
24: lower bridge (bridge portion)
36: suspension
60: gas tank
71: tank bracket
72: tank bracket
75: suspension bracket
76: support hole for suspension bracket

## Claims

1. A straddle-type vehicle (1) for traveling using gas fuel, the straddle-type vehicle comprising:
a vehicle body frame (10) that forms a frame of a vehicle body;
a long gas tank (60) configured to store the gas fuel; and
a suspension (36) configured to absorb vibration of the vehicle body,
wherein a lower portion of the vehicle body frame includes: a tank bracket (71) that supports the gas tank; and a suspension bracket (75) that supports the suspension, and
wherein the gas tank is supported on the tank bracket such that a longitudinal direction of the gas tank is oriented in a front-rear direction, and the suspension is supported on the suspension bracket below the gas tank such that a longitudinal direction of the suspension is oriented in the front-rear direction.

2. The straddle-type vehicle according to claim 1,
wherein the suspension bracket is located below the tank bracket.

3. The straddle-type vehicle according to claim 1 or 2,
wherein the tank bracket is a pair of tank brackets that are spaced apart from each other in the front-rear direction,
wherein a front end portion of the suspension is supported in a support hole of the suspension bracket, and
wherein a rear end of the rear tank bracket is located rearward of the support hole of the suspension bracket.

4. The straddle-type vehicle according to claim 1 or 2,
wherein the vehicle body frame includes a pair of frame portions that are located on both sides of the gas tank, and a bridge portion that connects lower portions of the pair of frame portions, and
wherein the tank bracket connects the lower portions of the pair of frame portions, and the suspension bracket is provided on the bridge portion.
